# EUROPEAN PATENT APPLICATION

(11) **EP 4 691 216 A1**
(43) Date of publication of application: **11.02.2026**
(21) Application number: 25190696.2
(22) Date of filing: 21.07.2025
(51) Int. Cl.: A01B 59/06, A01B 63/02, A01B 69/08

(54) **GUIDANCE HITCH**

(30) Priority: 08.08.2024 US 202418798496
(71) Applicant: Tomic, Rick, New Dundee ON N0B 2E0 (CA)
(72) Inventor: Tomic, Rick, New Dundee ON N0B 2E0 (CA)
(74) Representative: Barker Brettell LLP

(57) **Abstract**

A guidance hitch (100) includes a forward hitch assembly (200), a rearward hitch assembly (300) and a linkage arrangement (1000) pivotally connecting the rearward hitch assembly (300) to the forward hitch assembly (200). The forward hitch assembly (200) is adapted to mount to a tractor's three-point hitch. The rearward hitch assembly (300) is adapted to support an implement (20). At least one hydraulic steering cylinder (600) is capable of angularly positioning the rearward hitch assembly (300) with respect to the forward hitch assembly (200). A side-shift hydraulic cylinder is capable laterally positioning the rearward hitch assembly (300) with respect to the forward hitch assembly (200).

## Description

### BACKGROUND

A three-point hitch is a widely used type of hitch for attaching implements to the rear of a tractor. With a three-point hitch, some or all of the weight of the implement is transferred to the tractor and the orientation of the implement is relatively fixed with respect to the rear of the tractor, such that when the tractor turns, the implement will turn with the rear of the tractor. When performing precision field operations with an implement attached by a three-point hitch to the tractor, such as when cultivating between crop rows, it is necessary to steer the tractor to ensure that the implement (which extends several feet rearward the tractor), remains substantially perpendicular to the row crops to avoid inadvertently tilling up the crops when advancing through the field.

It should be appreciated that when traversing a relatively flat field with relatively straight crop rows, maintaining the implement substantially perpendicular to the crop rows is generally not problematic. However, when the tractor turns to follow curved crop row, the implement will no longer be perpendicular to the crop rows, requiring the operator to steer the tractor to compensate for the misaligned position of the implement relative to the crop rows to avoid tilling up the crop. Similarly, when operating on side hills, the implement may tend to drift downhill which may again requiring the operator to steer slightly uphill to compensate for the downhill drift of the implement to avoid tilling up the crops.

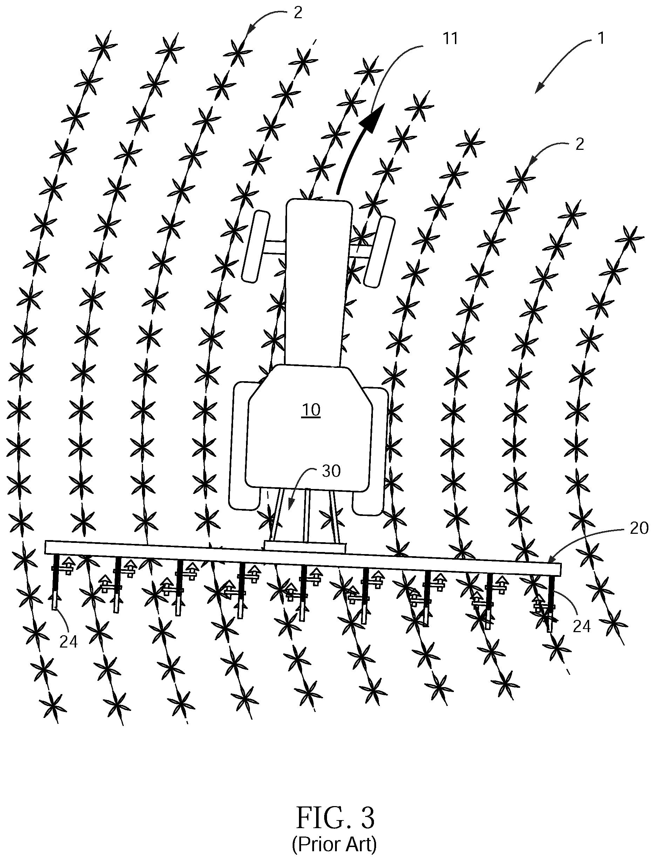

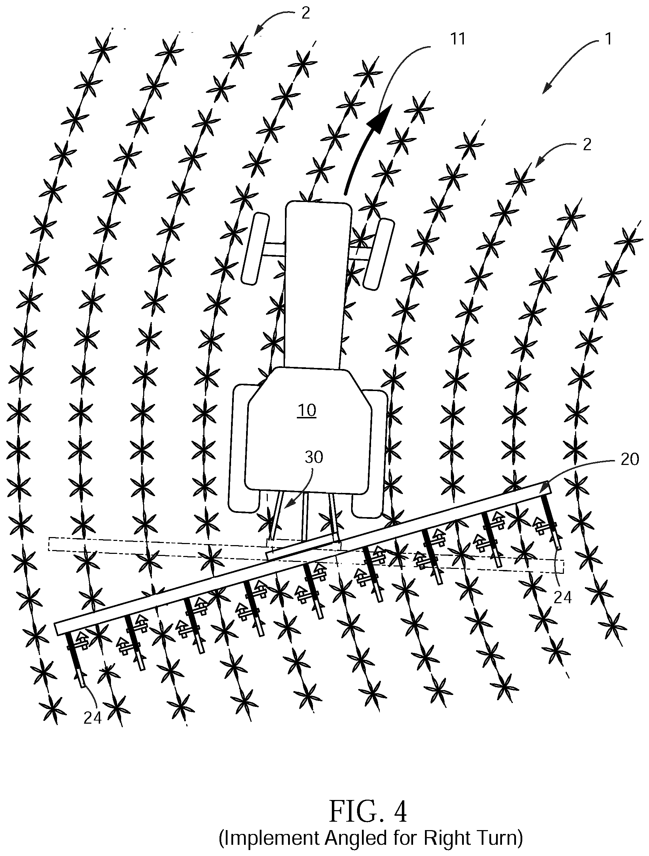

For example, referring to FIG. 3, a tractor 10 with an eight row cultivator implement 20 is shown in operation within a field 1 with crop rows 2 planted along a curve. The cultivator implement 20 is mounted to the tractor's conventional three-point hitch 30. As the tractor 10 travels in the forward direction of travel 11 and turns to follow the crop rows, the row units 24 of the cultivator 20 (which extends several feet rearward of the tractor 10), become misaligned with the centerline between adjacent crop rows 2. The amount of misalignment of the row units 24 relative to the centerline between the crop rows increases toward the inner radius of curvature of the crop rows. The wider the implement (e.g., a twelve row cultivator), the more misalignment will occur toward the inner most row. In reference to FIG. 3, it should be appreciated that the cultivator sweeps on the inner most row unit 24 will end up tilling up the crops if the tractor proceeds in the forward direction of travel along the curved crop rows. Alternatively, the front tractor tires will end up running over the crops. Either way, crop damage occurs. Ideally, as illustrated in FIG. 4, the cultivator implement 20 would be angled relative to the rear axle of the tractor (from the non-angled position shown in dashed lines) such that the cultivator implement 20 travels more perpendicular to the crop rows to avoid damage to the crop.

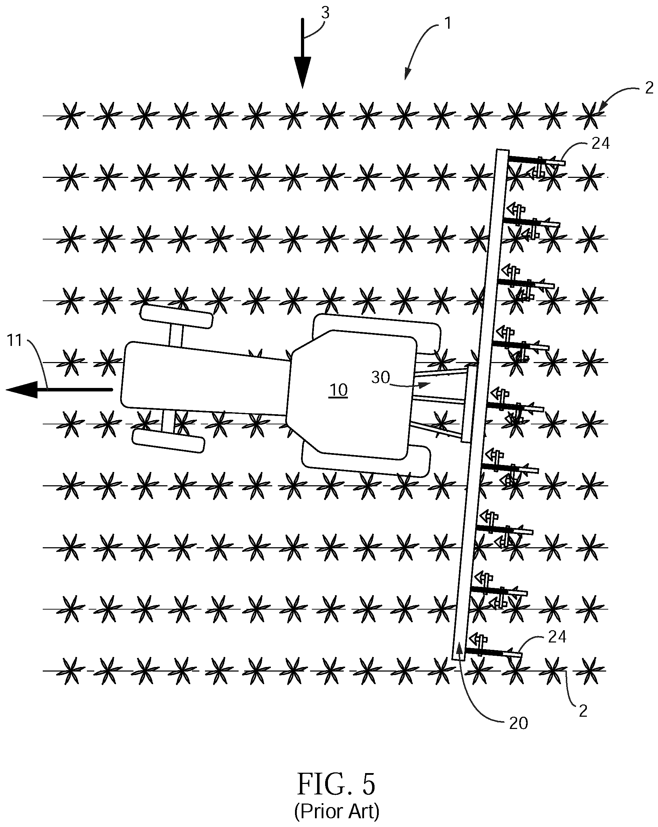

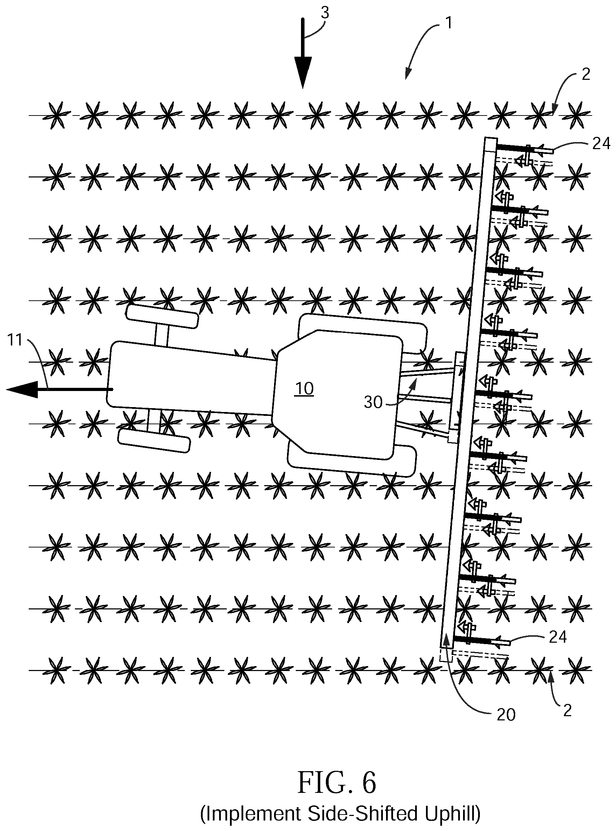

As another example, FIG. 5 shows a tractor 10 with an eight row cultivator implement 20 traveling through a field 1 with straight crop rows 2 along a sidehill having a downhill slope in the direction indicated by arrow 3. The front wheels of the tractor 10 are shown as being turned slightly uphill to compensate for the downhill drift of the tractor and cultivator implement 20 resulting in the tractor 10 and cultivator implement 20 traveling at an angle or skew relative to the forward direction of travel 11. It can be seen that due to the downhill drift, the cultivator sweeps of the row units 24 can end up tilling up the crops, and/or the operator will have to run over the crop rows with the front tires of the tractor to compensate for the downhill drift. Either way, crop damage occurs. Ideally, as illustrated in in FIG. 6, the cultivator implement 20 would be shifted laterally uphill relative to the tractor 10 (from the non-shifted position shown in dashed lines) such that the row units remain relatively centered between the crop rows despite the downhill drift of the tractor and implement to avoid damage to the crop.

Row guidance and auto-steering systems have been employed to assist operators in maintaining the implement in the proper position relative to the crop rows. Row guidance sensors detect the position of the implement with respect to the crop rows (either by contact feelers or via non-contact sensors) and if a row unit of the implement gets too close or too far from a crop row, the row guidance sensors send a signal to the tractor's auto-steering system to cause the tractor to steer in the direction necessary to attempt to realign the implement with respect to the crop rows to avoid damage to the crop. While row guidance and auto-steering systems serve their intended purpose when operating in a field with relatively straight crop rows, or with crop rows along a large radius of curvature, or in fields where implements have relatively minimal downhill drift, existing row guidance and auto-steering systems are not effective when operating in fields where the crop rows have a tighter radius of curvature or in fields where implements experience significant downhill drift because the row guidance and auto-steering systems are incapable of steering the tractor to adequately compensate for tighter row curvatures or downhill drift without causing crop damage.

Additionally, while there are some commercially available hitches that are capable side-shift mode in which the implement side-shifted laterally relative to the centerline of the tractor to compensate for some downhill drift, and while there are some commercially available hitches that are capable of angling or steering the implement relative to the forward direction of travel to compensate for some row curvature, these commercially available hitches are not capable of multiple operating modes whereby the implement can be both side-shifted and angled or steered relative to the tractor. Accordingly, there remains a need for a hitch that cooperates with the tractor's conventional three-point hitch that is configurable to allow for multiple modes of operation separately or simultaneously and which is capable of cooperating with commercially available row guidance and auto-steering systems.

### BRIEF DESCRIPTION OF THE DRAWINGS

FIG. 1A is a top plan view of a tractor with a cultivator implement mounted to the tractor's conventional three-point hitch.
FIG. 1B is a side elevation view of a tractor with a cultivator implement mounted to the tractor's conventional three-point hitch.
FIG. 2 is a rear elevation view of the tractor with the implement removed to show the tractor's conventional three point hitch.
FIG. 3 is a top plan view of the tractor and cultivator implement mounted to the tractor's conventional three-point hitch showing how the row units of the cultivator implement become misaligned when the crop rows are curved.
FIG. 4 is the same top plan view of the tractor and cultivator implement as in FIG. 3, but showing the cultivator implement angled with respect to the rear axle so the cultivator implement is generally perpendicular to the crop rows and the row units generally parallel with the crop rows.
FIG. 5 is a top plan view of the tractor and cultivator implement mounted to the tractor's conventional three-point hitch showing how the row units of the cultivator implement become misaligned when traveling on a sidehill due to downhill drift of the tractor and implement.
FIG. 6 is the same top plan view of the tractor and cultivator implement as in FIG. 5, but showing the cultivator implement side-shifted uphill relative to the rear of the tractor such that the row units are more centered between the crop rows.
FIG. 7 is a front perspective view of one embodiment of a guidance hitch mounted to the three-point hitch.
FIG. 8 is a rear perspective view of the guidance hitch of FIG. 7.
FIG. 9 is a bottom front perspective view of the rearward hitch assembly.
FIG. 10A is a partially exploded front perspective view of the guidance hitch of FIG. 7.
FIG. 10B is a more fully exploded front perspective view of FIG. 9A.
FIG. 11A is a top plan view of the guidance hitch of FIG. 7 with the rearward hitch assembly centered and parallel with respect to the forward hitch assembly.
FIG. 11B is a top plan view of the guidance hitch of FIG. 7 with the rearward hitch assembly angled relative to the to the forward hitch assembly in a right steering mode.
FIG. 11C is a top plan view of the guidance hitch of FIG. 7 with the rearward hitch assembly side-shifted to the right relative to the forward hitch assembly in a right side-shift mode.
FIG. 11D is a top plan view of the guidance hitch of FIG. 7 with the rearward hitch assembly angled and side-shifted relative to the forward hitch assembly in a right side-shift and right curve mode.
FIG. 12 is an embodiment of a hydraulic schematic for the guidance hitch.
FIG. 13 is a schematic illustration of a guidance system and controller for automatically actuating the steering cylinders and side-shift cylinder.

### DESCRIPTION

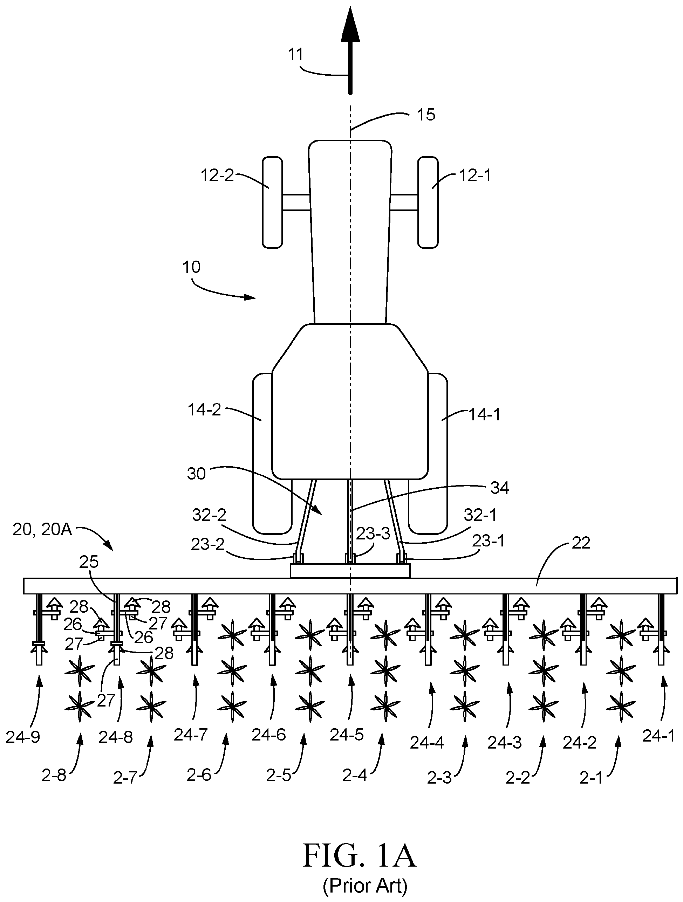

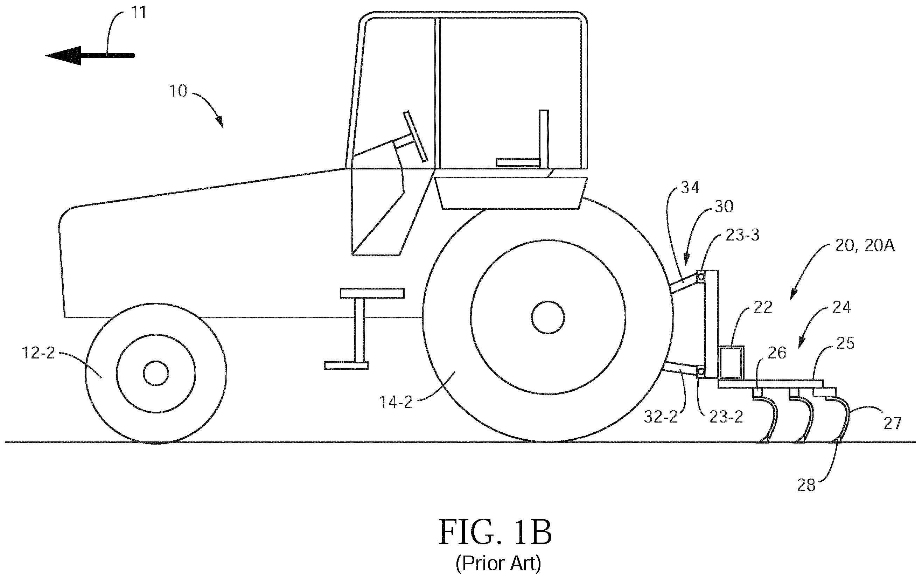

Referring now to the drawing figures wherein like reference numbers are used to designate the same or corresponding parts throughout the several view, FIG. 1A illustrates a top plan view of a tractor 10 with an implement 20 mounted at the tractor's three-point hitch 30 and traveling in a forward direction of travel as indicated by arrow 11. FIG. 1B illustrates a side elevation view of the tractor 10 and implement 20 mounted at the tractor's three-point hitch 30 traveling in the forward direction of travel as indicated by arrow 11. The tractor 10 includes right and left front wheels 12 -1, 12-2 and right and left rear wheels 14-1, 14-2. For reference, "right" and "left" as used throughout, refer to the right and left sides, respectively, of an operator on the tractor 10 facing in the forward direction of travel 11.

The implement 20, may be any agricultural implement that is typically mounted to a tractor 10 with a three-point hitch 30. In FIGs. 1A and 1B, the implement 20 is depicted as a row crop cultivator 20A. The cultivator 20A, includes a toolbar 22, with a plurality of spaced row units 24 extending rearwardly from the toolbar 22. Each row unit 24 includes a rearwardly extending frame member 25 and transverse members 26 to which are attached tines or shanks 27. The lower end of each tine or shank 27 includes a replaceable sweep, shovel or point 28. As depicted, the cultivator 20A is shown as an eight row cultivator, in that eight crop rows 2-1 to 2-8 pass between the respective row units 24-1 to 24-9. The cultivator 20A depicted in FIGs. 1A and 1B is provided as an illustrative example only and it should be appreciated that the cultivator 20A may have more or fewer row units 24 for cultivating between two to sixteen or more crop rows 2.

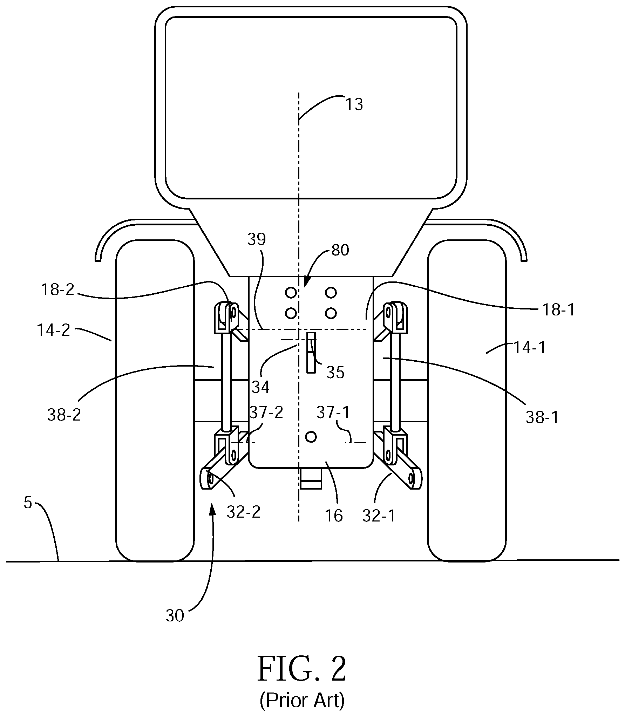

FIG. 2 is a rear elevation view of the tractor 10 with the implement 20 removed to better illustrate the tractor's conventional three-point hitch 30. The three-point hitch 30 includes right and left lift arms 32-1, 32-2 and an upper arm 34. The upper arm 34 is pivotally mounted at its forward end to the tractor 10 at a pivot 35 located generally along the vertical axis 13 of the tractor frame 16. The pivot 35 may be a ball joint or a similar joint that permits the rearward (distal) end of upper arm 34 to have a range of motion both vertically and horizontally. The length of the upper arm 34 may be longitudinally adjustable. The right and left lift arms 32-1, 32-2 are pivotally attached to the tractor 10 at forward lift arm pivots 37-1, 37-2 on the tractor frame 16. The lift arm pivots 37-1, 37-2 may be ball joints or similar joints that permit the rearward (distal) ends of the right and left lift arms 32-1, 32-2 to have a range of motion both vertically and horizontally. Right and left link adjusters 38-1, 38-2 are pivotally connected at their lower ends to the respective right and left lift arms 32-1, 32-2 and are pivotally connected at their upper ends to the tractor's right and left rocker arms 18-1, 18-2. The rocker arms 18-1, 18-2 are pivotally mounted on a rockshaft (not shown) along axes 39 supported on the tractor frame 16 and are hydraulically controlled to raise and lower by the tractor's hydraulic system. Thus, it should be appreciated that pivoting of the rocker arms 18-2, 18-2 raises and lowers the lift arms 32-1, 32-2. Referring to FIGs. 1A and 1B, the implement 20 includes forward lugs 23-1, 23-2, 23-3 arranged in a triangle configuration, such that the right and left lift arms 32-1, 32-2 are pinned to the respective lower forward lugs 23-1, 23-2 and the upper arm 34 is pinned to the upper center lug 23-3 whereby the implement 20 is oriented in a generally fixed orientation perpendicular to the vertical axis 13 and longitudinal axis 15 of the tractor 10, while permitting the implement 20 to be raised and lowered vertically with respect to the tractor 10 and the soil surface 5 (FIG. 2) by the three-point hitch 30.

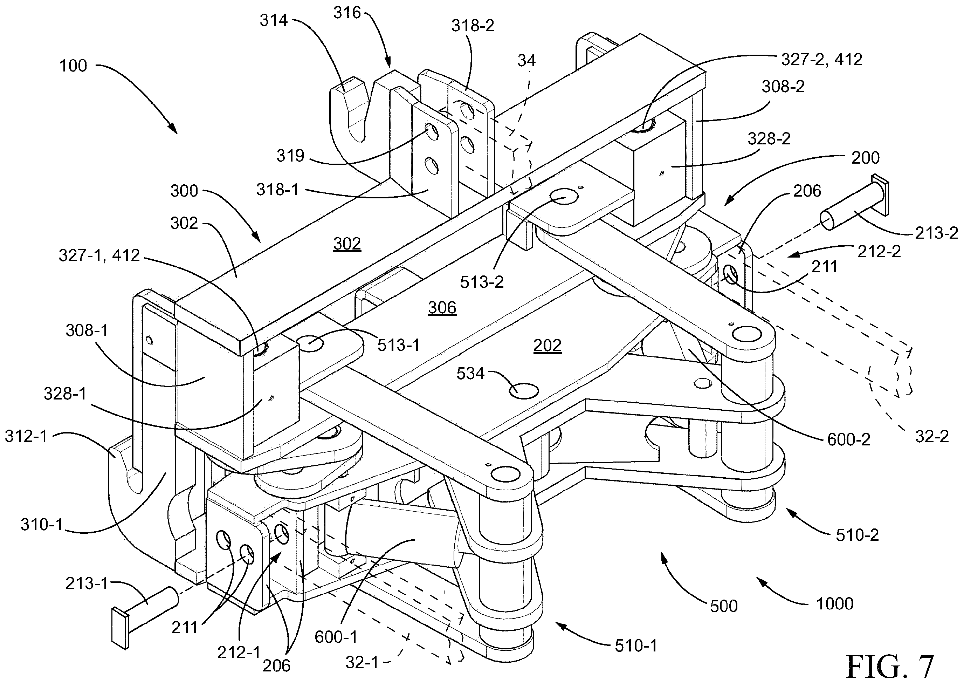

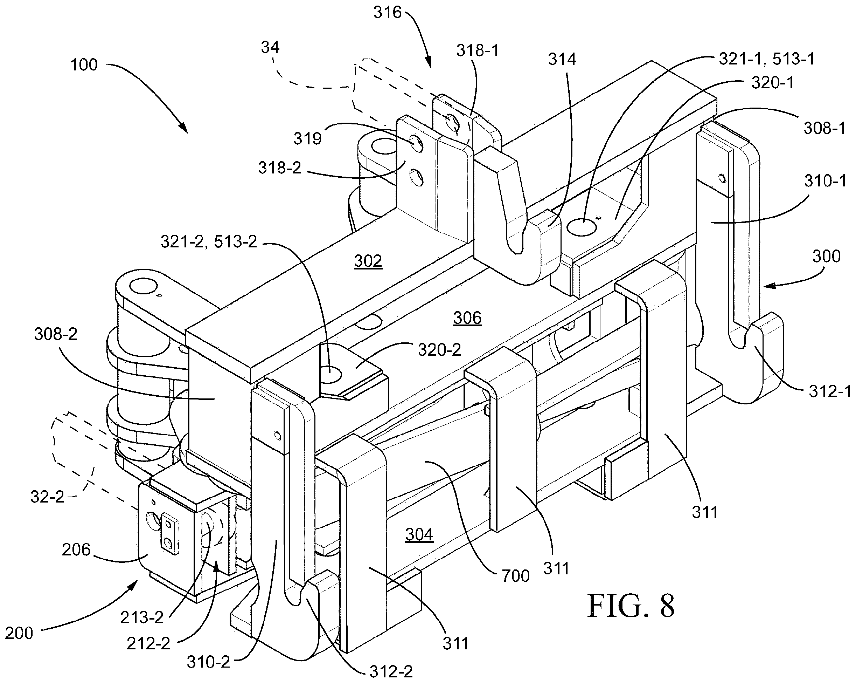

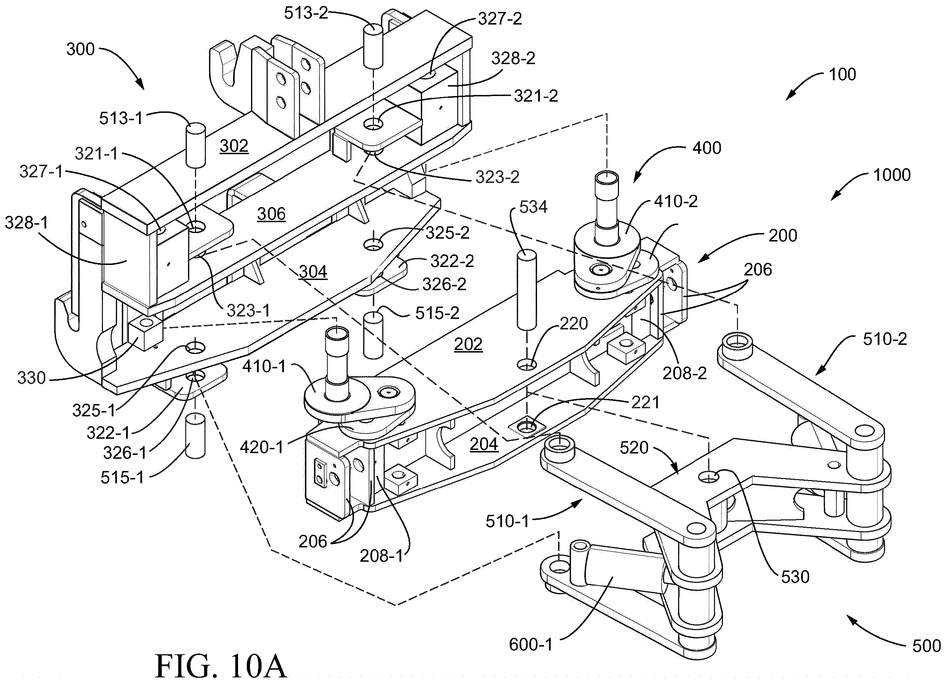

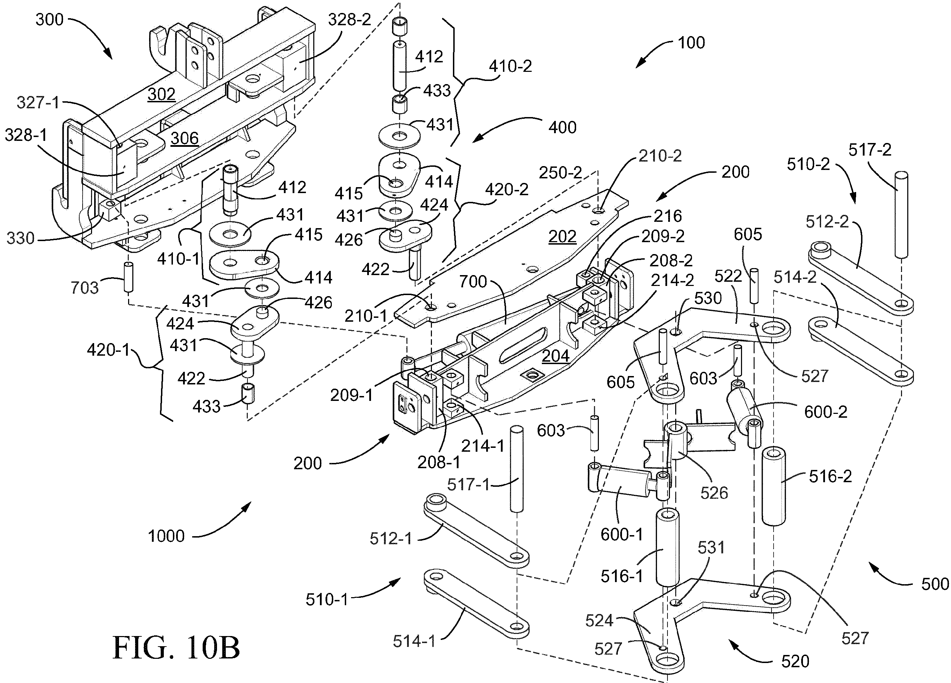

FIG. 7 is a front perspective view of one embodiment of a guidance hitch 100. FIG. 8 is a rear perspective view of the guidance hitch 100 of FIG. 7. FIG. 10A is a partially exploded front perspective view of the guidance hitch 100 of FIG. 7. FIG. 10B is a more fully exploded view of FIG. 10A. The guidance hitch 100 includes a forward hitch assembly 200, a rearward hitch assembly 300 and a linkage arrangement 1000. The linkage arrangement 1000 connects the rearward hitch assembly 200 to the forward hitch assembly 100 in a manner that allows the rearward hitch assembly 300 to move relative to the forward hitch assembly 200 in order to position the guidance hitch 100 and the implement 20 mounted thereto among different operating modes (discussed later). In one embodiment, the linkage arrangement 1000 includes a bearing link assembly 400 (FIG. 10B) and a draft link assembly 500 described below. It should be appreciated that embodiment of the forward hitch assembly 200 and the rearward hitch assembly 300, as well as the linkage arrangement 1000 comprising the bearing link assembly 400 and the draft link assembly 500 are non-limiting exemplary configurations or arrangements of the guidance hitch 100. Alternative configurations or arrangements of the forward hitch assembly 200, the rearward hitch assembly 300, and the linkage arrangement 1000 may also be employed as recognized by those of ordinary skill in the art to provide a guidance hitch capable of positioning an implement 20 among the different operating modes or positions as discussed later.

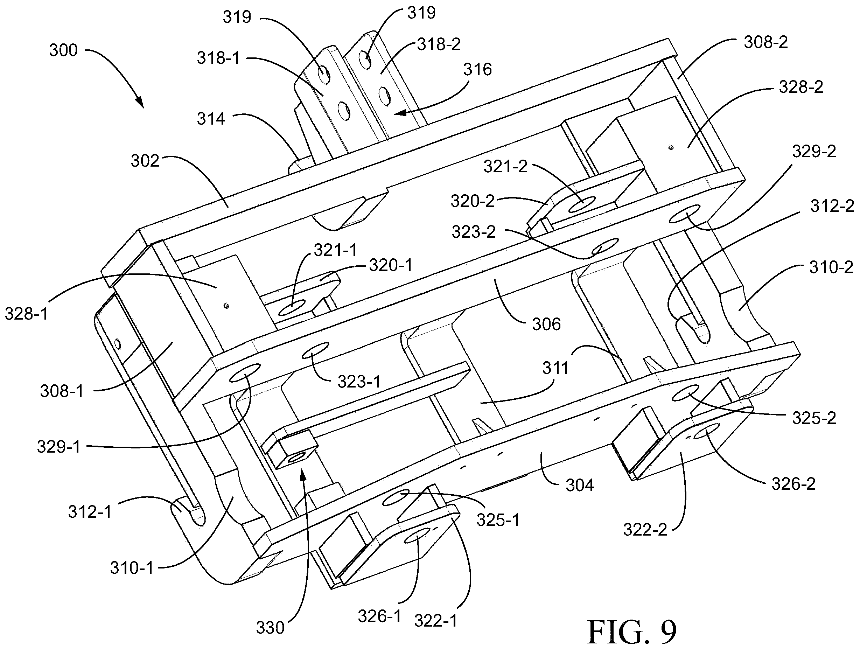

Referring to FIG. 9, which is a bottom front perspective view of the rearward hitch assembly 300, the rearward hitch assembly 300 includes a top plate 302, a bottom plate 304 (FIG. 8) and an intermediate plate 306. The top plate 302 and intermediate plate 306 are vertically spaced by right and left outer frame members 308-1, 308-2. The intermediate plate 306 and bottom plate 304 are vertically spaced by rear brackets 310-1, 310-2 and rear gusset plates 311.

The rearward side of the rearward hitch assembly 300, i.e. the side facing the implement 20 (hereafter the "implement side"), includes a three-point quick-attach coupler arrangement comprising right and left lower hooks 312-1, 312-2 extending rearwardly from the rear brackets 310-1, 310-2. An upper hook 314 extends rearwardly from the upper plate 302. The right and left lower hooks 312-1, 312-2 and the upper hook 314 respectively receive the right and left lugs 23-1, 23-2 and the center lug 23-3 on the implement 20 (FIG. 1), thereby securing the implement 20 to the implement side of the rearward hitch assembly 300. The forward side of the rearward hitch assembly 300, i.e. the side facing the tractor 10 (hereafter the "tractor side"), includes an upper arm coupler 316. The upper arm coupler 316 includes spaced vertical plates 318-1, 318-2 with aligned apertures 319 to receive an upper arm pin (not shown) that extends through the aligned apertures 319 and through an eye in the upper arm 34 of the tractor's three-point hitch 30 (FIGs. 1, 2, 7 and 8) thereby securing the upper arm 34 to the rearward hitch assembly 300.

Right and left upper link plates 320-1, 320-2 are spaced above the intermediate plate 306. Right and left lower link plates 322-1, 322-2 are spaced below the bottom plate 304. The right and left upper link plates 320-1, 320-2 and the intermediate plate 306 include respective vertically aligned right and left upper link arm apertures 321-1, 321-2, 323-1, 323-2. The right and left lower link plates 322-1, 322-2 and the bottom plate 304 include respective vertically aligned right and left lower link apertures 325-1, 325-2, 326-1, 326-2. The purpose of the vertically aligned upper link arm apertures 321-1, 321-2, 323-1, 323-2 in the upper link plates 320-1, 320-2 and intermediate plate 306 are to receive right and left upper link arm pins 513-1, 513-2 (discussed later). Likewise the purpose of the vertically aligned lower link apertures 325-1, 325-2, 326-1, 326-2 in the lower link plates 322-1, 322-2 and the bottom plate 304 are to receive right and left lower link arm pins 515-1, 515-2 (discussed later).

The rearward hitch assembly 300 also includes right and left upper bearing blocks 328-1, 328-2, each having respective upper bearing block apertures 327-1, 327-2 (FIGs. 7 and 8), which align with respective right and left upper bearing link apertures 329-1, 329-2 in the intermediate plate 306, the purpose of which are to receive the vertical shafts 412 of the right and left upper bearing links 410-1, 410-2 (discussed later). The rearward hitch assembly 300 also includes a side-shift cylinder mount 330, also discussed later.

As best viewed in FIGs. 10A and 10B, the forward hitch assembly 200 includes top and bottom plates 202, 204 vertically spaced by the vertical end plates 206, right and left lower bearing blocks 208-1, 208-2, and internal gusset plates (not numbered). Each of the right and left lower bearing blocks 208-1, 208-2 includes a respective lower bearing block aperture 209-1, 209-2 that vertically aligns with respective right and left lower bearing link apertures 210-1, 210-2 in the top plate 202. The vertical plates 206 are horizontally spaced to form right and left lift arm couplers 212-1, 212-2 for receiving the right and left lift arms 32-1, 32-2 of the tractor's three-point hitch 30 (FIGs. 1, 2, 7 and 8). The vertical plates 206 include aligned apertures 211 to receive a respective right and left lift arm pin 213-1, 213-2. Each lift arm pin 213-1, 213-2 extends through the respective aligned apertures 211 and through an eye in the right and left lift arms 32-1, 32-2 of the tractor's three-point hitch 30 (FIGs. 1, 2, 7 and 8) to secure the right and left lift arms 32-1, 32-2 to the forward hitch assembly 200.

As best viewed in FIGs. 7, 10A and 10B, disposed between the top and bottom plates 202, 204 of the forward hitch assembly 200 are left and right hydraulic steering cylinders 600-1, 600-2 and a hydraulic side-shift cylinder 700, each of which is connected by hydraulic hoses (not shown) to the tractor's hydraulic rear remotes, ports or valve bank 80 (FIG. 2). Each of the steering cylinders 600-1, 600-2 is pivotally secured at its rearward end by rearward steering cylinder pins 603 received within right and left steering cylinder mounting blocks 214-1, 214-2. The forward end of each of the steering cylinders 600-1, 600-2 is pivotally secured to the draft link assembly 500 (discussed later) by a forward steering cylinder pin 605. The side-shift cylinder 700 is pivotally secured at its rearward end to a side-shift cylinder block 330 on the rearward hitch assembly 300 by a rearward side-shift cylinder pin 703 . The forward end of the side-shift cylinder 700 is pivotally secured by a forward side-shift cylinder pin 705 received within a forward side-shift cylinder mounting block 216 on the forward hitch assembly 200. It should be appreciated that instead of utilizing the two right and left steering cylinders 600-1, 600-2, the guidance hitch may be adapted to utilize a single steering cylinder.

As best viewed in FIG. 10B, the bearing link assembly 400 includes right and left upper bearing links 410-1, 410-2 and right and left lower bearing links 420-1, 420-2. The right and left upper bearing links 410-1, 410-2 are pivotally supported from the rearward hitch assembly 300. The lower bearing links 420-1, 420-2 are pivotally supported by the forward hitch assembly 200. Each of the upper bearing links 410-1, 410-2 includes a vertical shaft 412 extending upwardly from an upper lobe plate 414. The upper lobe plate 414 includes an aperture 415. Each of the lower bearing links 420-1, 420-2 includes a vertical shaft 422 extending downwardly from a lower lobe plate 424. The lower lobe plate 424 includes an upwardly extending stud 426 that is received within the aperture 415 of the upper lobe plate 414, thereby pivotally connecting the upper bearing links 410-1, 410-2 with the respective lower bearing links 420-1, 420-2. The vertical shaft 412 of each of the right and left upper bearing links 410-1, 410-2 is pivotally received by the respective right and left upper bearing blocks 328-1, 328-2 through the respective upper bearing block apertures 327-1, 327-2 (FIGs. 7 and 10A) and the respective aligned upper bearing link apertures 329-1, 329-2 (FIG. 9) in the intermediate plate 306. The vertical shaft 422 of each of the right and left lower bearing links 420-1, 420-2 is pivotally received by the respective right and left lower bearing blocks 208-1, 208-2 (FIG. 10B) through the respective lower bearing block apertures 209-1, 209-2 and through the respective lower bearing link apertures 210-1, 210-2 in the top plate 202 of the forward hitch assembly 200. Lubricious bearing pads or plates 431, such as Teflon^{®}, may be disposed around the shafts 412, 422 and the stud 426 to reduce friction and wear between bearing surfaces. The shafts 412, 422 may include bushings 433 to reduce friction and wear as the shafts 412, 422 rotate within the respect upper and lower bearing blocks 328-1, 328-2, 208-1, 208-2.

Continuing to refer to FIGs. 10A and 10B, the draft link assembly 500, includes right and left draft links 510-1, 510-2 and a center link 520. Each of the right and left draft links 510-1, 510-2, include respective upper link arms 512-1, 512-2 and lower link arms 514-1, 514-2, each rotationally fixed at their forward ends to forward right and left arm pins 517-1, 517-2 extending through respective right and left forward tubular posts 516-1, 516-2. The right and left forward arm pins 517-1, 517-2 rotate relative to the respective right and left forward tubular posts 516-1, 516-2. Thus it should be appreciated that the right upper and lower link arms 512-1, 514-1 rotate together with right forward arm pin 517-1 as a unit relative to the right forward tubular post 516-1 Likewise, the left upper and lower link arms 512-2, 514-2 rotate together with left forward arm pin 517-2 as a unit relative to the left forward tubular post 516-2. The rearward ends of the right and left upper link arms 512-1, 512-2 are pivotally secured by respective right and left upper link arm pins 513-1, 513-2 to the rearward hitch assembly 300 through the respective right and left upper link arm apertures 321-1, 323-1; 321-2, 323-2. The rearward ends of the right and left lower link arms 514-1, 514-2 are pivotally secured by respective right and left lower link arm pins 515-1, 515-2 to the rearward hitch assembly 300 through the respective right and left lower link arm apertures 325-1, 325-2; 326-1, 326-2.

Continuing to refer to FIGs. 10A and 10B, the center link 520 includes vertically spaced upper and lower center link plates 522, 524. The forward ends of the upper and lower center link plates 522, 524 are vertically spaced along and are rotationally fixed with the forward tubular posts 516-1, 516-2. The rearward ends of the upper and lower center link plates 522, 524 are vertically spaced by and rotationally fixed to a center tubular post 526. The upper and lower center link plates 522, 524 include vertically aligned center link plate apertures 530, 531. The center link 520 is pivotally attached to the forward hitch assembly 200 by a center link pivot pin 534 that extends through vertically aligned center link pivot pin apertures 220, 221 in the top and bottom plates 202, 204, respectively, of the forward hitch assembly 200 and through the center link plate apertures 530 and through the central tubular post 526. Thus the center link pivot pin 534 defines a pivot axis of the center link 520.

As previously identified, the forward end of the right and left steering cylinders 600-1, 600-2 are pivotally attached to the center link 520 by forward steering cylinder pins 605 that extend through apertures 527 in the upper and lower central link plates 522, 524. The rearward end of the right and left steering cylinders 600-1, 600-2 are pivotally secured to the forward hitch assembly 200 by rearward steering cylinder pins 603 received within right and left steering cylinder mounting blocks 214-1, 214-2.

### Operating Modes

The guidance hitch 100 may be operated in several modes, including a "steering mode", a "side-shift mode," a "side-shift+curve mode," a "float mode" and a "locked mode" each of which is discussed separately below.

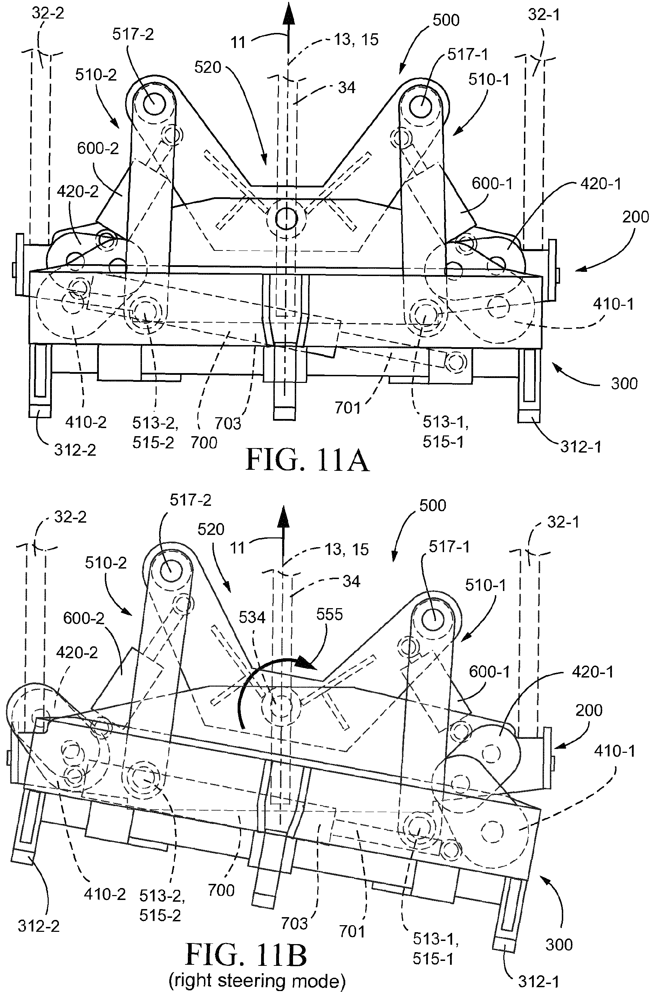

FIG. 11A is a top plan view of an embodiment of the guidance hitch 100. As shown, the steering cylinders 600-1, 600-2 and side-shift cylinder 700 are in the neutral position such that the rearward hitch assembly 300 is generally parallel with and centered relative the forward hitch assembly 200. The right and left lift arms 32-1, 32-2 and the upper arm 34 of the tractor's three-point hitch 30 are shown in dashed lines coupled to the right and left lift arm couplers 212-2, 212-2 and to the upper arm coupler 316, respectively, of the forward hitch assembly 200. For clarity, the guidance hitch 100 is shown without the implement 20 mounted to the rearward hitch assembly 300, but it should be appreciated that the implement 20 would be mounted to the rearward hitch assembly 300 via the right and left lower hooks 312-1, 312-2 and the upper hook 314 as previously described. The forward direction of travel of the tractor 10 and implement 20 is indicated by arrow 11.

### Steering Mode

The steering mode of the guidance hitch 100 is used with three-point hitch mounted implements 20 utilizing coulters or disc blades (such as discs harrows) because such implements are not capable of being shifted laterally (i.e., side-shifted) due to the coulters or discs resisting such lateral movement. Accordingly, implements 20 utilizing coulters or disc blades need to be angled or "steered" relative to the forward direction of travel in order to position the implement 20 laterally with respect to the tractor's axes 13, 15 such as when attempting to compensate for downhill drift of the implement when working on sidehills or when attempting to angle the implement relative to the forward direction of travel in order to better track around curves within a field.

When operating the guidance hitch 100 in steering mode, the steering cylinders 600-1, 600-2 are actuated to cause the center link 520 to rotate about the center link pivot pin 534 resulting in the rearward hitch assembly 300 to move at an angle relative to the forward direction of travel 11. The steering cylinders 600-1, 600-2 may be actuated manually by the operator or they may be automatically actuated as discussed later. The side-shift cylinder 700 is not actuated and remains in the neutral or centered position.

FIG. 11B shows the guidance hitch in a right steering mode. Comparing FIG. 11B to FIG. 11A, it should be appreciated that the center link 520 is rotated about the center link pivot pin 534 in the clockwise direction (as viewed in FIG. 11B) as indicated by arrow 555. This clockwise rotation of the center link 520 causes the rearward hitch assembly 300 to be angled relative to the forward hitch assembly 200 such that the right side of the rearward hitch assembly 300 is rearward of the left side of the rearward hitch assembly 300. In other words, the right side of the rearward hitch assembly 300 is angled away from the forward direction of travel 11 and the left side of the rearward hitch assembly 300 is angled toward the forward direction of travel 11. To accomplish this clockwise rotation of the center link 520 about the center link pivot 534, the cylinder rod 601 of the right steering cylinder 600-1 is retracted into the cylinder body 603 and the left cylinder rod 601 of the left steering cylinder 600-2 is extended from the cylinder body 603. As previously identified, the rotation of the center link 520 could also be accomplished with a single steering cylinder.

Continuing to compare FIG. 11B to FIG. 11A, as the rearward hitch assembly 300 is angled relative to the forward hitch assembly 200, the rearward ends of the right and left draft links 510-1, 510-2 pivot about the respective right and left upper and lower link arm pins 513-1, 515-1; 513-2, 515-2 and the forward ends of the right and left draft links 510-1, 510-2 rotate together with the forward arm pins 517-1, 517-2. Additionally, the upper bearing links 410-1, 410-2 and lower bearing links 420-1, 420-1 pivot with respect to one another to allow the angular movement of the rearward hitch assembly 300 relative to the generally stationary forward hitch assembly 200.

Although not shown, it should be appreciated that if it is desired to steer the implement 20 to the left (i.e., left steering mode), the steering cylinders 600-1, 600-2 would be actuated to extend the cylinder rod 601 from the cylinder body 603 of the right steering cylinder 600-1 and retract the cylinder rod 601 into the cylinder body 603 of the left steering cylinder 600-2, thereby forcing the center link 520 to pivot or rotate in a counter-clockwise direction about the central pivot pin 534. Again, the pivotal movement of the center link 520 about the central pivot pin 534 could be accomplished with a single steering cylinder. With the counter-clockwise rotation of the center link 520, the rearward hitch assembly 300 will be forced to move at an angle relative to the forward hitch assembly 200, but with the counter-clockwise rotation of the center link 520, the left side of the rearward hitch assembly 300 will be pushed rearwardly away from the forward direction of travel 11 and the right side of the rearward hitch assembly 300 will be pulled forward toward the forward direction of travel 11. In other words, in the left steering mode, the position of the rearward hitch assembly 300 relative to the forward hitch assembly 200 would be a substantial mirror image or opposite of the position shown in FIG. 11B.

With commercially available steering hitches on the market, the right and left lift arms 32-1, 32-2 of the tractor's three-point hitch 30 are not restrained from swinging laterally from side-to-side (at least until the lift arms abut left and right lateral stops to avoid the lift arms 32-1, 32-2 from hitting the rear tires of the tractor 10). Thus, when actuating commercially available steering hitches, the lift arms 32-1, 32-2 are free to swing to assist steering the implement in the desired direction. When operating the guidance hitch 100 in the steering mode, the tractor's right and left lift arms 32-1, 32-2 are also unrestrained, but the guidance hitch 100provides a greater amount of tracking offset than other steering hitches on the market because the pivoting links 510-1, 510-2; 410-1, 410-2; 420-1, 420-2 of the guidance hitch 100 further contribute to the lateral correction or desired offset. Thus, the pivoting links 510-1, 510-2; 410-1, 410-2; 420-1, 420-2 of the guidance hitch 100 greatly reduce the amount of lateral motion required by the tractor's three-point hitch lift arms 32-1, 32-2, thereby reducing wear on the lift arm joints, which are open and unlubricated and therefore are likely to wear much faster than the lubricated links of the guidance hitch 100. Furthermore, the greater amount of tracking offset of the guidance hitch 100 also allows better tracking of the implement 20 on tighter radius curves (to both the right and left) than other commercially available steering hitches.

### Side-Shift Mode

The side-shift mode of the guidance hitch 100 is used with three-point hitch mounted implements 20 such as cultivator implements 20A that have soil engaging tools such as sweeps, shovels or points that can be shifted laterally (i.e., side-shifted) while working or tilling the soil in order to offset the implement 20 either to the right or left of the longitudinal axis 15 and/or vertical axis 13 of the tractor 10. Such lateral offset positions of the implement are useful to counter downhill drift of the implement 20 as the tractor 10 and implement 20 travel along sidehills through a field. The direction of the side-shift to the right or to the left will depend on whether the downhill drift is to the right or to the left with respect to the forward direction of travel. Additionally, the amount of side-shift offset to the right or left will depend on the amount of downhill drift being experienced which can vary depending on the steepness of the sidehill being traversed, soil conditions, weight of the implement, speed of travel and other factors.

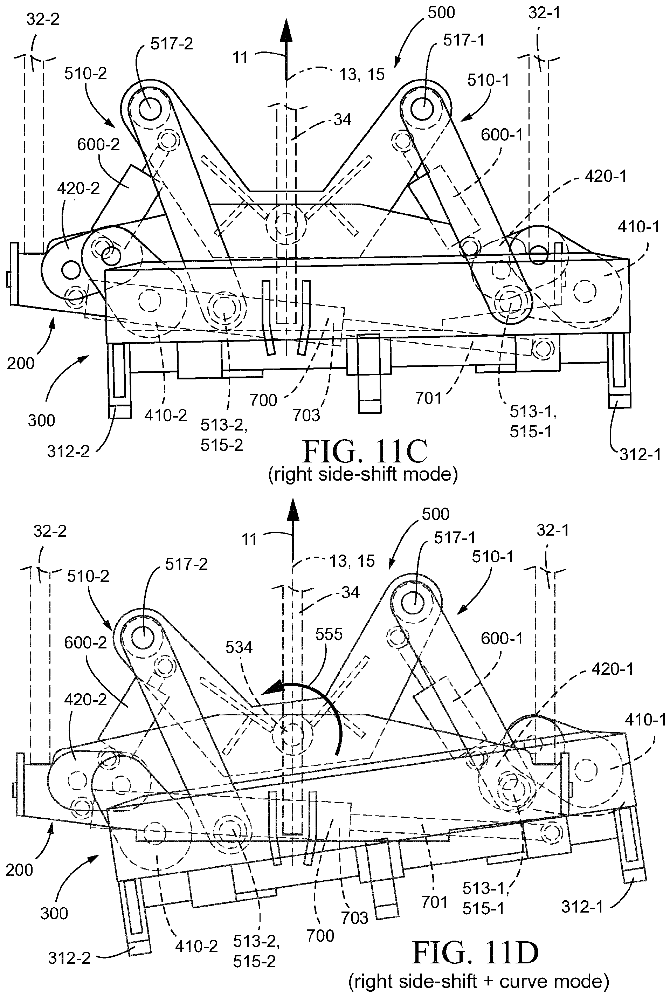

FIG. 11C shows the guidance hitch 100 in a right side-shift position. Comparing FIG. 11C to FIG. 11A, it should be appreciated that in FIG. 11C the side-shift cylinder 700 is actuated with the cylinder rod 701 extended from the cylinder body 703 from its neutral position shown in FIG. 11A, resulting in the rearward hitch assembly 300 being forced to side-shift or translate laterally to the right relative to the forward hitch assembly 200 which remains generally centered along the tractor's axes 13, 15. In other words, the centerline of the rearward hitch assembly 300 and the implement 20 attached thereto is offset to the right of the tractor's axes 13, 15. When the guidance hitch 100 is operated in the side-shift mode, the right and left lift arms 32-1, 32-2 are restrained to limit the amount that the lift arms are able to swing laterally from side-to-side. It should be appreciated that if the lift arms 32-1, 32-2 were unrestrained, the lateral movement of the rearward hitch assembly 300 (and thus the lateral offset of the implement 20), would be countered by the lift arms 32-1, 32-2 swinging laterally, thus preventing or reducing the amount of lateral offset of the implement than can be achieved if the lift arms 32-1, 32-2 are laterally restrained.

Continuing to compare FIG. 11C to FIG. 11A, as the rearward hitch assembly 300 shifts laterally relative to the forward hitch assembly 200, the rearward ends of the right and left draft links 510-1, 510-2 pivot about the respective right and left upper and lower link arm pins 513-1, 515-1; 513-2, 515-2 and the forward ends of the right and left draft links 510-1, 510-2 rotate together with the forward arm pins 517-1, 517-2. Additionally, the upper bearing links 410-1, 410-2 and lower bearing links 420-1, 420-1 pivot with respect to one another to allow the side-shift of the rearward hitch assembly 300 relative to the generally stationary forward hitch assembly 200. The center link 520 remains relatively stationary if the steering cylinders 600-1, 600-2 are not actuated. The side-shift cylinder 700 may be actuated manually by the operator or the side-shift cylinder 700 may be automatically actuated as discussed later.

Although not shown, it should be appreciated that if it is desired to position the implement in a left side-shift position such that the centerline of the rearward hitch assembly 300 and the implement 20 are to the left of the tractor's axes 13, 15, the side-shift cylinder 700 is actuated to retract the cylinder rod 701 into the cylinder body 703 from the centered or neutral position shown in FIG. 11A. In other words, the position of the rearward hitch assembly 300 relative to the forward hitch assembly 200 would be a substantial mirror image of the position shown in FIG. 11C.

It should also be noted in reference to FIG. 11C that due to the slightly trapezoidal configuration of the right and left draft links 510-1, 510-2, the rearward hitch assembly 300 will slightly angle relative to the forward hitch assembly 200 as the rearward hitch assembly 300 side-shifts laterally. When the rearward hitch assembly 300 is side-shifted to the right of the forward hitch assembly 300 by extending the side-shift cylinder 700, the right side of the rearward hitch assembly 300 moves forward of the left side of the rearward hitch assembly 300. Conversely, when the rearward hitch assembly 300 is shifted to the left by retracting the side-shift cylinder 700, the left side of the rearward hitch assembly 300 moves forward of the right side of the rearward hitch assembly 300It should also be appreciated that the offset distance to the right of the tractors axe's 13, 15 is controlled by the amount of extension of the cylinder rod 701 of the side-shift cylinder 700 from its centered position. Likewise, it should also be appreciated that the offset distance to the left of the tractor's axes 13, 15 is controlled by the amount of retraction of the cylinder rod 701 of the side-shift cylinder 700 from its centered position.

### Side-Shift + Curve Mode

The guidance hitch 100 may be operated in a side-shift + curve mode which combines the advantages of the side-shift mode and steering mode described above. The side-shift + curve mode is particularly advantageous when cultivating crops with curving crop rows, in order to maintain the implement 20 as perpendicular to the crops rows and the tillage points centered between and parallel with the crop rows as much as possible to avoid the crops from being inadvertently tilled up and damaged.

For example, referring to FIGs. 3 and 4, the tighter the radius of curvature, the more the innermost rows toward the inner radius of curvature are likely to be tilled up or damaged by the tillage points. Thus, the implement 20 may need to be both side-shifted and angled relative to the direction of travel to maintain the frame of the implement 20 perpendicular to the crop rows and to maintain the tillage points centered between and parallel with the crop rows.

FIG. 11D shows the guidance hitch 100 in a right side-shift + curve mode. Comparing FIG. 11D to FIG. 11A, it should be appreciated that in FIG. 11D the side-shift cylinder 700 is actuated with the cylinder rod 701 extended from the cylinder body 703 from its neutral position shown in FIG. 11A, resulting in the rearward hitch assembly 300 being side-shifted to the right relative to the forward hitch assembly 200 which remains generally centered along the tractor's axes 13, 15. Additionally, the right steering cylinder 600-1 is extended and the left steering cylinder 600-2 is retracted, resulting in the center link 520 being rotated in the counter-clockwise direction as indicated by arrow 555. To allow both the lateral offset or side-shift and the angled position of the rearward hitch assembly 300 relative to the forward hitch assembly 200, the rearward ends of the right and left draft links 510-1, 510-2 pivot about the respective right and left upper and lower link arm pins 513-1, 515-1; 513-2, 515-2 and the forward ends of the right and left draft links 510-1, 510-2 rotate together with the forward arm pins 517-1, 517-2. Additionally, the upper bearing links 410-1, 410-2 and lower bearing links 420-1, 420-1 pivot with respect to one another as shown. It should also be appreciated that the steering cylinders 600-1, 600-2 may be actuated to increase the angle of the rearward hitch assembly 300 relative to the forward hitch assembly 200 before the side-shift cylinder 700 is actuated, or regardless of the lateral position of the rearward hitch assembly 300 relative to the forward hitch assembly 200.

Although not shown, it should be appreciated that if it is desired to position the implement in a left side-shift + curve mode such that the centerline of the rearward hitch assembly 300 and the implement 20 are to the left of the tractor's axes 13, 15 and such that the rearward hitch assembly 200 is angled with the left side of the rearward hitch assembly forward of the right side of the rearward hitch assembly, the side-shift cylinder 700 is actuated to retract the cylinder rod 701 into the cylinder body 703 from the centered or neutral position shown in FIG. 11A. Likewise, the steering cylinders 600-1, 600-2 would be actuated to retract the cylinder rod 601 into the cylinder body 603 of the right steering cylinder 600-1 and to extend the cylinder rod 601 from the cylinder body 603 of the left steering cylinder 600-2, thereby forcing the center link 520 to pivot or rotate in a clockwise direction about the central pivot pin 534. In other words, in the left side-shift + curve mode, the position of the rearward hitch assembly 300 relative to the forward hitch assembly 200 would be a substantial mirror image of the position shown in FIG. 11D.

When the guidance hitch 100 is operated in the side-shift + curve mode, the right and left lift arms 32-1, 32-2 are restrained to limit the amount that the lift arms are able to swing laterally from side-to-side in order to obtain the desired amount of lateral offset as explained above under the discussion of the side-shift mode. Despite the lift arms 32-1, 32-2 being laterally restrained, due to the pivotal movement of the right and left draft links 510-1, 510-2 and the upper and lower bearing links 410-1, 410-2 of the guidance hitch 100, the rearward hitch assembly 300 is still able to sufficiently angled and laterally offset relative to the forward hitch assembly 200 to achieve the desired angle and offset of the implement 20.

### Float Mode and Locked Mode

The float mode of the guidance hitch 100 is used with three-point hitch mounted implements 20 such as planters or strip till implements having coulters or disc blades so that the implement trails the tractor similar to the way the implement would trail the tractor if mounted to the tractor's draw bar (i.e., a drawn implement). It should be appreciated that when a planter or strip till implement is mounted to a tractor's conventional three-point hitch, a substantial amount of side pressure is placed on the coulters or disc blades when attempting to turn along curves or contours of a field and this side pressure also interferes with the tractor's ability to turn. Thus, by utilizing the float mode when using a three-point hitch mounted planter or strip till implement, the side pressure on the coulters is substantially eliminated and there is less interference with the tractor's ability to turn such that performance is more like that of a tractor pulling a drawn implement attached to the tractor's drawbar rather than an implement attached to the tractor's three-point hitch.

Accordingly, when operating in the float mode, the hydraulic valves (discussed later) controlling fluid flow to and from the side-shift cylinder 700 remain open, thereby allowing the side-shift cylinder rod 701 to extend and retract as needed as the soil acts on the coulters or disc blades as the implement 20 tracks behind the tractor 10 through the field. As discussed later, lateral position sensor(s) may be utilized when the guidance hitch 100 is being operated in float mode such that the guidance hitch 100 operates in a manner similar in effect to the steering mode. For example, if the lateral position sensor(s) detect that the rearward hitch assembly 300 has become laterally offset from the forward hitch assembly 200, the output signal of the lateral position sensors is received by the hydraulic controller 900 (discussed later) to actuate the steering cylinders 600-1, 600-2 to effectively steer the implement 200 back on-center.

Alternatively, when traveling through the field in generally straight lines, the operator can "lock" the side-shift cylinder 700 and steering cylinders 600-1, 600-2 in their centered position by closing the hydraulic valves (discussed later) to prevent hydraulic fluid flowing into or out of the cylinders 600,-1, 600-2, 700. Thus, in the "locked mode" the rearward hitch assembly 300 is prevented from moving laterally or angling with respect to the forward hitch assembly 200 such that the implement 20 acts as if it is directly mounted to the tractor's three point hitch.

### Hydraulic Circuit and Control

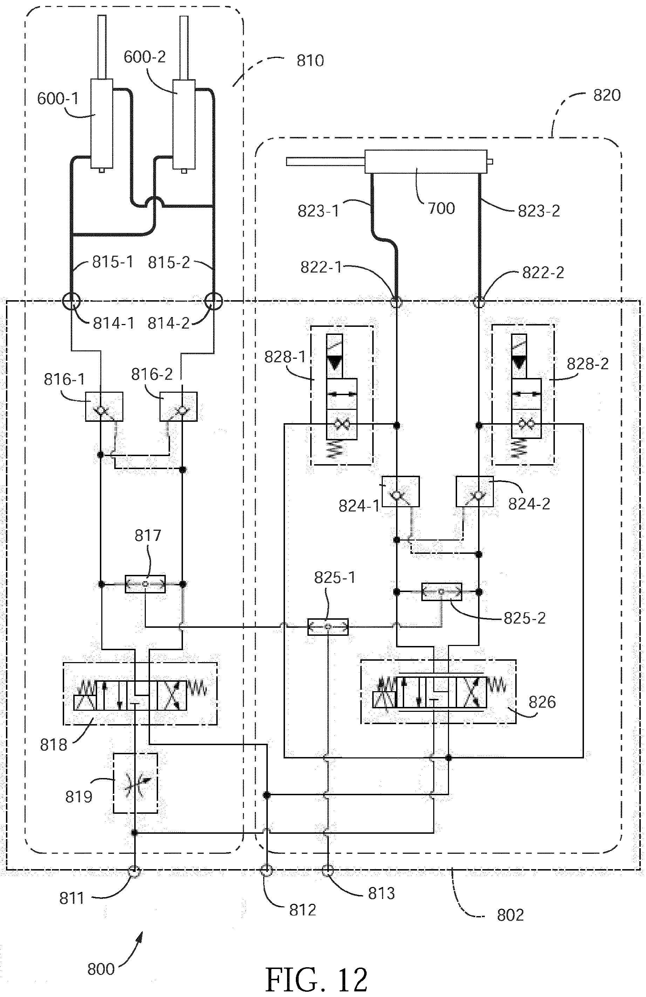

One embodiment of a hydraulic system 800 for the guidance hitch 100 is illustrated in FIG. 12. In this embodiment, the hydraulic system 800 includes a manifold block 802 which may be mounted to the rearward hitch assembly 300, or to the forward hitch assembly 200 or supported from the tractor 10.

The manifold block 802 includes a steering circuit 810 and a side-shift circuit 820. Hydraulic fluid is supplied to both the steering circuit 810 and the side-shift circuit 820 via an inlet port 811 on the manifold block 802. The inlet port 811 is connected to the tractor's hydraulic remotes or ports of the valve bank 80 (FIG. 2) via hydraulic lines (not shown). The manifold block 802 also includes a return port 812 and a pressure compensation port 813, each of which are also connected via hydraulic lines (not shown) to the tractor's hydraulic remotes or ports of the valve bank 80. The manifold block 802 also includes steering ports 814-1, 814-2 that connect to respective chambers of the steering cylinders 600-1, 600-2 via hydraulic lines 815-1, 815-2. The manifold block 802 also includes side-shift ports 822-1, 822-2 that connect to respective chambers of the side-shift cylinder 700 via hydraulic lines 823-1, 823-2.

The steering circuit 810 includes pilot check valves 816-1, 816-2, a shuttle valve 817, a solenoid operated proportional directional valve 818 (or alternatively a solenoid operated directional control valve), and a flow control needle valve 819.

The side-shift circuit 820 includes pilot check valves 824-1, 824-2, shuttle valves 825-1, 825-2, a solenoid operated proportional directional valve 826, and solenoid operated valves 828-1, 828-2. The solenoid operated valves 828-1, 828-2 are operably connect to the respective chambers of the side-shift cylinder 700 to permit the rearward hitch assembly 300 to float back and forth laterally when the guidance hitch 100 is in the float mode as discussed above or to "lock" the side-shift cylinder 700 into the center or neutral position in the lock mode as discussed above.

Power is provided to valves 818, 826, 828-1, 828-2 and to any other valves or sensors of the hydraulic system 800 by electrical lines (not shown) connected to the tractor's electrical system or to an external power source. In the foregoing embodiment, the hydraulic system 800 is designed for a maximum pressure of 3000 pounds per square inch (psi) and max flow rate of 6 gallons per minute (gpm). It should be appreciated that the hydraulic system 800 described above is but one non-limiting example of a hydraulic system that may be use for the guidance hitch 100. Other hydraulic circuits and components as recognized by those of ordinary skill in the art may be used or substituted to achieve the functionality of the various operating modes described above.

### Manual Operation

In manual operation, the operator manually manipulates the control levers, switches or touch screen user interface in the cab of the tractor 10 to cause the steering cylinders 600-1, 600-2 or the side-shift cylinder 700, or both, to extend or retract as needed in accordance with the modes of operation described above.

### Automated Operation

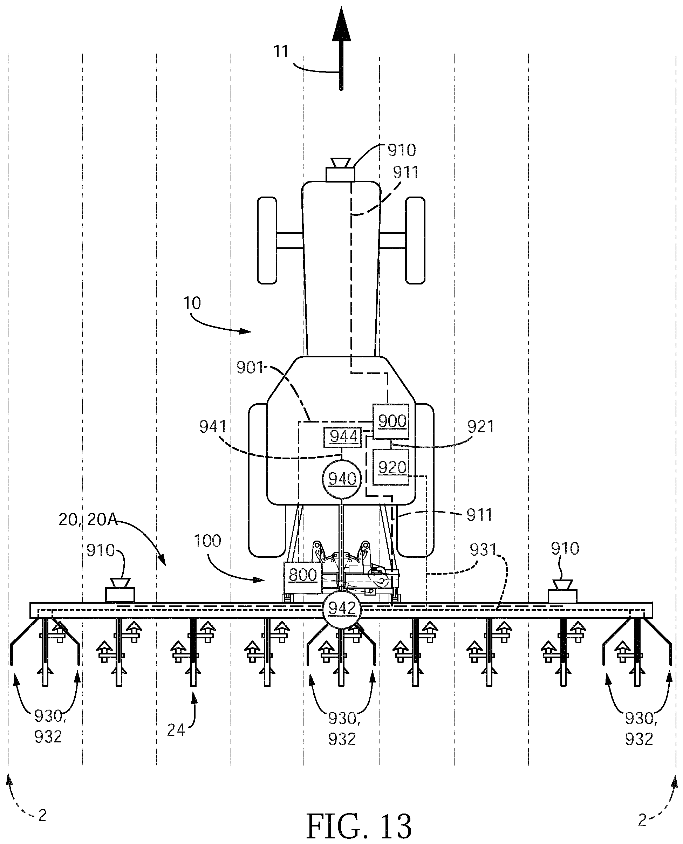

As schematically represented in FIG. 13, the actuation of the steering cylinders 600-1, 600-2 or side-shift cylinder 700, or both, may be automated by integrating the hydraulic system 800 with a guidance hitch controller 900 that commands the steering cylinders 600-1, 600-2 and/or side-shift cylinder 700 to extend or retract based on feedback to the guidance hitch controller 900 from different types of sensor systems discussed below. It should be appreciated that although FIG. 13 shows the guidance hitch controller 900 interfacing with all three types of systems (vision-based system, contact or non-contact sensor based system, and a GPS-based system), only one of the three systems would typically be used in operation.

### Vision-Based System

A vision-based system utilizing one or more forward-looking cameras 910 may be disposed on the implement 20 (and/or on the tractor 10) as shown in FIG. 13 to detect whether the crop rows ahead of the implement 20 are straight or are curving to the right or are curving to the left of the present position of the implement 20. The forward-looking cameras 910 may be in signal communication with the guidance hitch controller 900 via signal lines 911 or wirelessly. Vision or camera-based row guidance systems for guiding or steering agricultural vehicles between straight and curving crop rows of a field are known in the art, such as disclosed in U.S. Patent Nos. 7,400,957 and 7,792,622 and Australia Patent No. 691,051, each of which is incorporated herein by reference. Such vision or camera-based row guidance systems include a row guidance controller 920 which processes the images received from one or more cameras and determines if the tractor and/or row units of the implement are centered between the crop rows. If the row guidance controller 920 determines that the tractor or implement is not centered between the row units or detects that the crop rows are curving, the row guidance controller 920 will output control signals to an aftermarket steering device (not shown) configured to turn the tractor's steering wheel mechanically or the control signals may be communicated to the tractor's electronic control unit (ECU) to steer or turn the tractor to the right, left or in a straight line as needed to maintain the tractor 10 and implement 20 between the crop rows. Thus, the guidance hitch controller 900 could be configured similar to a camera-based row guidance controller 920 used for automatically steering a tractor through a field, but instead of controlling the tractor's steering system, the output signals could be used to actuate the steering cylinders 600-1, 600-2 and/or side-shift cylinder 700 via the hydraulic system 800 to achieve the various operating modes described above. Alternatively, if the tractor is already equipped with a camera based row guidance system, those of skill in the art would recognize and understand that the control signals from the camera-based row guidance controller 920 for steering the tractor may also be communicated to the guidance hitch controller 900 via signal lines or wirelessly, so as to actuate the steering cylinders 600-1, 600-2 and/or side-shift cylinder 700 via the hydraulic system 800 to achieve the various operating modes described above.

### Contact or Non-Contact Sensor System

Row guidance systems which utilize contact or non-contact sensors are well known in the art. Such row guidance systems include a row guidance controller 920 that is in signal communication with one or more row sensors 930 via signal lines 931 or wirelessly. The row sensors 930 may be disposed on the tractor 10, on the implement 20 or both. The row sensors 930 may be contact sensors or non-contact sensors which generate signals indicative of the amount of the lateral displacement of the row sensors 930 relative to an adjacent crop row or a centerline between crop rows. Row sensors 930 that utilize contact sensors may include feelers or wands 932 that extend laterally outward toward one more adjacent crop rows 2. The wands 932 are typically mounted to be centered between the crop rows and are able to pivot about a pivot axis. If the implement or an individual row unit 24 become off-centered between adjacent crop rows, one of the wands 932 will begin to engage with the adjacent crop row causing the wand 932 to rotate. A rotation sensor disposed at the pivot axis generates a signal having a magnitude proportional to the amount of rotation or angular deflection of the wand 932. The generated signals are communicated to the row guidance controller 920 via signal lines 931 or wirelessly. Similarly, non-contact row sensors (not shown), may include ultrasound sensors, radar, LIDAR, cameras, etc., which generate a signal indicative of the amount of lateral displacement of the row unit relative to an adjacent crop row or a centerline between crop rows. As with the contact sensors, the generated signals from the non-contact sensors may be communicated to the row guidance controller 920 via signal lines 931 or wirelessly. The row guidance controller 920 outputs control signals in response to the signals generated by the row sensors 930. The control signals may be communicated to an aftermarket steering device (not shown) configured to turn the tractor's steering wheel mechanically or the control signals may be communicated directly or indirectly to cause the tractor's electronic control unit (ECU) to steer or turn the tractor to the right, left or in a straight line in response to the signals received from the row sensors 930. Thus, the guidance hitch controller 900 could be configured similar to a contact or non-contact sensor based row guidance controller 920 used for automatically steering a tractor through a field, but instead of controlling the tractor's steering system, the output signals could be used to actuate the steering cylinders 600-1, 600-2 and/or side-shift cylinder 700 via the hydraulic system 800 to achieve the various operating modes described above. Alternatively, if the tractor is already equipped with a contact or non-contact based row guidance system, those of skill in the art would recognize and understand that the control signals from the row guidance controller 920 may also be communicated to the guidance hitch controller 900 via signal lines 921 or wirelessly, so as to actuate the steering cylinders 600-1, 600-2 and/or side-shift cylinder 700 via the hydraulic system 800 in accordance with the various operating modes described above.

### GPS Based System

GPS guidance systems are also well known in the art. GPS guidance systems typically utilize real-time kinematic (RTK) GPS data that is obtained with a first RTK/GPS receiver 940 on the tractor 10 and a second RTK/GPS receiver 942 on the implement 20 so as to obtain an accurate relative position of both the tractor 10 and each of the row units 24 of the implement 20 based on measurements and geometry of the implement entered by the operator during setup. The first and second RTK/GPS receivers 940, 942 are in communication with a GPS guidance controller 944 via signal lines 941 or wirelessly. The GPS guidance controller 944 may be a separate controller or it may be an integral part of the tractor's ECU. The GPS guidance controller 944 outputs control signals based on the RTK/GPS data from the first and second RTK/GPS receivers. The control signals may be communicated to an aftermarket steering device (not shown) configured to turn the tractor's steering wheel mechanically or the control signals may be communicated to the tractor's ECU to steer or turn the tractor to the right, left or in a straight line as needed to maintain the implement 20 along predetermined guidance lines established during planting or prior field operations. Thus, the guidance hitch controller 900 could be configured similar to a GPS guidance controller 944 used for automatically steering a tractor through a field, but instead of controlling the tractor's steering system, the output signals could be used to actuate the steering cylinders 600-1, 600-2 and/or side-shift cylinder 700 via the hydraulic system 800 to achieve the various operating modes described above. Alternatively, if the tractor is already equipped with a GPS guidance system, those of skill in the art would recognize and understand that the control signals from GPS guidance controller 944 may also be communicated to the guidance hitch controller 900 via signal lines or wirelessly, so as to actuate the steering cylinders 600-1, 600-2 and/or side-shift cylinder 700 via the hydraulic system 800 to achieve the various operating modes described above.

Various modifications to the embodiments and to the general principles, features and methods of operation of the guidance hitch 100, the hydraulic system 800 and the guidance hitch controller 900 will be apparent to those of ordinary skill in the art. Thus, the foregoing disclosure including the drawings should be accorded the widest scope consistent with the appended claims and the full scope of the equivalents to which such claims are entitled..

## Claims

1. A guidance hitch for mounting an agricultural implement to a three-point hitch of an agricultural tractor, the guidance hitch comprising:
a forward hitch assembly adapted to be supported from the agricultural tractor's three-point hitch;
a rearward hitch assembly adapted to support the agricultural implement; and
a linkage arrangement connecting the rearward hitch assembly to the forward hitch assembly such that the rearward hitch assembly is capable of moving relative to the forward hitch assembly;
at least one steering cylinder pivotally connected at a forward end to the forward hitch assembly and pivotally connected at a rearward end to the linkage arrangement;
whereby, actuation of the steering cylinder to extend and retract causes the rearward hitch assembly to be angularly positioned relative to the forward hitch assembly.

2. The guidance hitch of claim 1, further comprising:
a side-shift cylinder pivotally connected at a forward end to the forward hitch assembly and pivotally connected at a rearward end to the rearward hitch assembly;
whereby, actuation of the side-shift cylinder to extend and retract causes the rearward hitch assembly to be laterally positioned relative to the forward hitch assembly.

3. The guidance hitch of claim 1, wherein the linkage arrangement includes:
a right link assembly pivotally supporting a right side of the rearward hitch assembly from a right side of the forward hitch assembly;
a left link assembly pivotally supporting a left side of the rearward hitch assembly from a left side of the forward hitch assembly; and
a draft link assembly further pivotally coupling the rearward hitch assembly with the forward hitch assembly.

4. The guidance hitch of claim 2, wherein the linkage arrangement includes:
a right link assembly pivotally supporting a right side of the rearward hitch assembly from a right side of the forward hitch assembly;
a left link assembly pivotally supporting a left side of the rearward hitch assembly from a left side of the forward hitch assembly; and
a draft link assembly further pivotally coupling the rearward hitch assembly with the forward hitch assembly.

5. The guidance hitch of claim 3, wherein:
the right link assembly includes a right upper lobe plate and a right lower lobe plate disposed between the right side of the forward and rearward hitch assemblies, wherein the right upper and lower lobe plates pivotally couple the right side of the rearward hitch assembly with the right side of the forward hitch assembly;
the left link assembly includes a left upper lobe plate and a left lower lobe plate disposed between the left side of the forward and rearward hitch assemblies, wherein the left upper and lower lobe plates pivotally couple the left side of the rearward hitch assembly with the left side of the forward hitch assembly.

6. The guidance hitch of claim 4, wherein:
the right link assembly includes a right upper lobe plate and a right lower lobe plate disposed between the right side of the forward and rearward hitch assemblies, wherein the right upper and lower lobe plates pivotally couple the right side of the rearward hitch assembly with the right side of the forward hitch assembly;
the left link assembly includes a left upper lobe plate and a left lower lobe plate disposed between the left side of the forward and rearward hitch assemblies, wherein the left upper and lower lobe plates pivotally couple the left side of the rearward hitch assembly with the left side of the forward hitch assembly.

7. The guidance hitch of claim 5, wherein:
the right draft link includes a right upper link arm and a right lower link arm, each pivotally coupled at a rearward end proximate to the right side of the rearward hitch assembly, and
the left draft link includes a left upper link arm and a left lower link arm, each pivotally coupled at a rearward end proximate to the left side of the rearward hitch assembly.

8. The guidance hitch of claim 6, wherein:
the right draft link includes a right upper link arm and a right lower link arm, each pivotally coupled at a rearward end proximate to the right side of the rearward hitch assembly, and
the left draft link includes a left upper link arm and a left lower link arm, each pivotally coupled at a rearward end proximate to the left side of the rearward hitch assembly.

9. A method of movably positioning an agricultural implement during field operations, the agricultural implement including soil engaging tools, the method comprising:
attaching a guidance hitch to a three-point hitch of an agricultural tractor, the guidance hitch including:
a forward hitch assembly supported from the agricultural tractor's three-point hitch;
a rearward hitch assembly supporting the agricultural implement; and
a linkage arrangement connecting the rearward hitch assembly to the forward hitch assembly;
at least one steering cylinder pivotally connected at a forward end to the forward hitch assembly and pivotally connected at a rearward end to the linkage arrangement;
advancing the agricultural tractor and agricultural implement through the field in a forward direction of travel with the soil engaging tools engaged with the soil and with the rearward hitch assembly substantially parallel with the forward hitch assembly;
with the soil engaging tools engaged with the soil as the agricultural tractor and agricultural implement advance through the field in the forward direction of travel, movably positioning the guidance hitch in a steering mode by actuating the at least one steering cylinder to cause the rearward hitch assembly and the agricultural implement supported therefrom to be angularly positioned relative to the forward hitch assembly and the forward direction of travel; and
with the soil engaging tools engaged with the soil as the agricultural tractor and agricultural implement advance through the field in the forward direction of travel, again actuating the at least one steering cylinder to cause the rearward hitch assembly to return to a position in which the rearward hitch assembly is substantially parallel with the forward hitch assembly.

10. The method of claim 9, wherein the guidance hitch further includes a side-shift cylinder pivotally connected at a forward end to the forward hitch assembly and pivotally connected at a rearward end to the rearward hitch assembly, the method further comprising:
advancing the agricultural tractor and agricultural implement through the field in a forward direction of travel with the soil engaging tools engaged with the soil and with the rearward hitch assembly substantially parallel with and centered with the forward hitch assembly;
with the soil engaging tools engaged with the soil as the agricultural tractor and agricultural implement advance through the field in the forward direction of travel, movably positioning the guidance hitch in a side-shift mode by actuating the side-shift cylinder to cause the rearward hitch assembly and the agricultural implement supported therefrom to move laterally relative to the forward hitch assembly and the forward direction of travel.

11. The method of claim 10, further comprising:
with the soil engaging tools engaged with the soil as the agricultural tractor and agricultural implement advance through the field in the forward direction of travel, and with the guidance hitch in the side-shift mode, actuating the at least one steering cylinder to cause the rearward hitch assembly and the agricultural implement supported therefrom to be angularly positioned relative to the forward hitch assembly and the forward direction of travel.

12. A guidance hitch for mounting an agricultural implement to a three-point hitch of an agricultural tractor, the guidance hitch comprising:
a forward hitch assembly adapted to be supported from the agricultural tractor's three-point hitch;
a rearward hitch assembly adapted to support the agricultural implement; and
a linkage arrangement, the linkage arrangement connecting the rearward hitch assembly to the forward hitch assembly such that the rearward hitch assembly is capable of moving both laterally relative to the forward hitch assembly and at an angle relative to the forward hitch assembly.

13. A method of working soil between adjacently spaced crop rows in a field with an agricultural implement having a toolbar supporting a plurality of spaced row units, each of the plurality of row unit including a soil engaging tool, the method comprising:
attaching a guidance hitch to a three-point hitch of an agricultural tractor, the guidance hitch including:
a forward hitch assembly supported from the agricultural tractor's three-point hitch;
a rearward hitch assembly supporting the agricultural implement; and
a linkage arrangement connecting the rearward hitch assembly to the forward hitch assembly;
positioning the agricultural tractor and agricultural implement in the field such that the toolbar is substantially perpendicular to a direction of the adjacently spaced crop rows and with each of the plurality of spaced row units substantially parallel with the adjacently spaced crop rows and substantially centered between two of the adjacently spaced crop rows;
advancing the agricultural tractor and agricultural implement through the field in a forward direction of travel with the soil engaging tools engaged with the soil between the adjacently spaced crop rows;
as the agricultural tractor and agricultural implement advances through the field with the soil engaging tools engaged with the soil between the adjacently spaced crop rows, adjusting a lateral position of the rearward hitch assembly relative to the forward hitch assembly such that the toolbar is maintained substantially perpendicular to the adjacently spaced crop rows and such that each of the plurality of row units is maintained substantially parallel with the adjacently spaced crop rows and substantially centered between the two adjacently spaced crop rows.

14. The method of claim 13, further comprising: with the agricultural tractor and agricultural implement advancing through the field in the forward direction of travel with the soil engaging tools engaged with the soil between the adjacently spaced crop rows, adjusting an angular position of the rearward hitch assembly relative to the forward hitch assembly such that the toolbar is maintained substantially perpendicular to the adjacently spaced crop rows and such that each of the plurality of row units is maintained substantially parallel with the adjacently spaced crop rows and substantially centered between the two adjacently spaced crop rows.

15. A method of adjusting a position of an agricultural implement while advancing through a field in a forward direction of travel, the field having adjacently spaced crop rows, the agricultural implement having a toolbar supporting a plurality row units, each of the plurality of row units including a soil engaging tool, the method comprising:
attaching a guidance hitch to a three-point hitch of an agricultural tractor, the guidance hitch including:
a forward hitch assembly supported from the agricultural tractor's three-point hitch;
a rearward hitch assembly supporting the agricultural implement; and
a linkage arrangement connecting the rearward hitch assembly to the forward hitch assembly;
positioning the agricultural tractor and agricultural implement in the field such that the toolbar is substantially perpendicular to a direction of the adjacently spaced crop rows and with each of the plurality of spaced row units substantially parallel with the adjacently spaced crop rows and substantially centered between two of the adjacently spaced crop rows;
advancing the agricultural tractor and agricultural implement through the field in a forward direction of travel with the soil engaging tools engaged with the soil between the adjacently spaced crop rows;
as the agricultural tractor and agricultural implement advances through the field with the soil engaging tools engaged with the soil between the adjacently spaced crop rows, detecting a position of at least one of the plurality of row units relative to two of the adjacently spaced crop rows;
based on the detected position, adjusting the rearward hitch assembly relative to the forward hitch assembly such that the toolbar is maintained substantially perpendicular to the adjacently spaced crop rows and such that each of the plurality of row units is maintained substantially parallel with the adjacently spaced crop rows and substantially centered between the two adjacently spaced crop rows.
